# FASCICULE DE BREVET EUROPEEN

(11) **EP 3 194 828 B1**
(45) Date de publication et mention de la délivrance du brevet: **20.01.2021**
(21) Numéro de dépôt: 15763026.0
(22) Date de dépôt: 15.09.2015
(51) Int. Cl.: F16L 37/091, F16L 37/092

(54) **DISPOSITIF ET PROCÉDÉ DE RACCORDEMENT POUR TUBE CHANFREINÉ**
VERBINDUNGSVORRICHTUNG UND -VERFAHREN FÜR ABGESCHRÄGTE ROHRE
CONNECTION DEVICE AND METHOD FOR CHAMFERED TUBE

(30) Priorité: 17.09.2014 FR 1458791; 08.12.2014 FR 1462024
(43) Date de publication de la demande: 26.07.2017
(73) Titulaire: Parker Hannifin Manufacturing France SAS, 74112 Annemasse (FR)
(72) Inventeur: LE QUERE, Philippe, 35830 Betton (FR)
(74) Mandataire: Lavialle, Bruno François Stéphane
(86) Numéro de dépôt international: PCT/EP2015/071135
(87) Numéro de publication internationale: WO 2016/041989

(56) Documents cités:
- EP-A2- 0 349 344
- DE-A1- 10 033 675
- FR-A- 1 455 850
- FR-A- 1 527 890
- FR-A1- 2 923 888
- FR-A1- 2 941 027
- US-A1- 2006 108 801

## Description

La présente invention concerne les circuits de transport de fluide tel qu'un circuit de régulation thermique. L'invention a plus particulièrement pour objet un dispositif et un procédé de raccordement pour tube chanfreiné.

Le document FR 1 455 850 décrit un raccord automatique pour canalisations souples.

Un circuit de transport de fluide comprend généralement des tubes reliés les uns aux autres par des dispositifs de raccordement auxquels sont raccordées des portions d'extrémité de ces tubes.

Un dispositif de raccordement comprend un corps tubulaire pourvu intérieurement d'un élément d'étanchéité annulaire et d'un organe d'accrochage pour assurer une retenue étanche de la portion d'extrémité du tube dans le corps. Le corps comprend un appendice tubulaire central sur lequel la portion d'extrémité de tube est destinée à être engagée, l'élément d'étanchéité étant monté sur ledit appendice pour être comprimé entre une surface extérieure de l'appendice et une surface intérieure de la portion d'extrémité de tube. Ce montage permet d'empêcher que le fluide ne vienne au contact de l'extrémité de tube, ce qui, dans le cas d'un tube laminé, pourrait provoquer une délamination de celle-ci.

Lors de l'installation, les tubes doivent être coupés aux longueurs correctes. Sur le site d'installation, cette coupe est réalisée en utilisant un coupe-tuyau de type sécateur. Ce mode de coupe occasionne un écrasement de la portion d'extrémité du tube qui garde une certaine ovalisation après la coupe. Une telle ovalisation fait naitre, au niveau de la face terminale de l'extrémité de conduite, un angle vif qui risque d'altérer l'élément d'étanchéité. En outre, ceci rend difficile l'obtention d'un contact continu de l'élément d'étanchéité sur la portion d'extrémité du tube. Il est donc nécessaire de redonner une section circulaire à la portion d'extrémité de tube avant son raccordement. Pour ce faire, on insère dans l'extrémité de tube un outil de conformation qui va également réaliser un chanfrein intérieur facilitant l'introduction de l'appendice du corps dans la portion d'extrémité de tube. Il existe des outils de conformation qui réalisent un chanfrein extérieur en plus du chanfrein intérieur.

Or, il arrive que l'opérateur chargé de l'installation oublie de conformer une des portions d'extrémité avant de procéder à son raccordement. Le risque de fuite est alors très important soit dès la mise sous pression du circuit, soit ultérieurement.

Un but de l'invention est de fournir un moyen permettant de limiter le risque qu'un tube ne soit raccordé avec une ovalisation qui peut conduire à une détérioration de l'élément d'étanchéité et à un risque de fuite.

A cet effet, on prévoit, selon l'invention, un dispositif de raccordement pour tube ayant une portion d'extrémité pourvue d'un chanfrein extérieur. Le dispositif comprend un corps tubulaire pourvu intérieurement d'un élément d'étanchéité annulaire et d'un organe d'accrochage pour assurer une retenue étanche de la portion d'extrémité du tube dans le corps. Le dispositif comprend au moins une butée escamotable agencée pour qu'elle s'oppose à une introduction dans le corps d'une portion d'extrémité de tube non chanfreinée et pour que le chanfrein forme une came d'escamotage de la butée lorsque la portion d'extrémité de tube chanfreinée est introduite dans le corps.

L'invention impose donc l'utilisation des outils de conformation qui réalisent un chanfrein extérieur en plus du chanfrein intérieur. Si la portion d'extrémité de tube a été conformée, son ovalisation a été corrigée et elle présente un chanfrein extérieur. Lors de l'introduction de la portion d'extrémité de tube dans le dispositif, le chanfrein extérieur fait office de came provoquant l'escamotage de la butée qui libère le passage pour la portion d'extrémité de tube et autorise le raccordement. Si la portion d'extrémité de tube ne comporte pas de chanfrein extérieur, on ne peut être assuré qu'elle a été conformée. Comme elle ne comporte pas de chanfrein extérieur, elle vient buter contre la butée qui ne s'escamote pas et interdit le raccordement. La butée constitue donc un organe de détrompage permettant à l'opérateur de s'apercevoir qu'il a omis de conformer l'extrémité de tube.

L'invention a également pour objet un procédé de raccordement d'un tube à un dispositif de raccordement, comprenant les étapes de :
- aménager sur le dispositif une butée escamotable n'autorisant l'introduction que d'une portion d'extrémité de tube chanfreinée extérieurement ;
- découper le tube à longueur ;
- conformer une portion d'extrémité du tube en lui donnant si nécessaire une section circulaire et en y réalisant au moins un chanfrein extérieur ;
- introduire la portion d'extrémité de tube dans le dispositif de raccordement.

D'autres caractéristiques et avantages de l'invention ressortiront à la lecture de la description qui suit de modes de réalisation particuliers non limitatifs de l'invention.

Il sera fait référence aux dessins annexés, parmi lesquels :
- la figure 1 est une vue en perspective avec un coupe axiale d'un dispositif de raccordement selon un premier mode de réalisation ;
- les figures 2a, 2b et 2c sont des vues partielles en coupe longitudinale montrant respectivement une tentative de raccordement d'une portion d'extrémité de tube non chanfreinée, le début d'introduction d'une portion d'extrémité de tube chanfreinée et la poursuite de l'introduction d'une portion d'extrémité de tube chanfreinée ;
- la figure 3 est une vue partielle en coupe longitudinale d'un dispositif de raccordement selon une première variante du premier mode de réalisation ;
- la figure 4 est une vue partielle en coupe longitudinale d'un dispositif de raccordement selon une deuxième variante du premier mode de réalisation ;
- la figure 5 est une vue partielle en coupe longitudinale d'un dispositif de raccordement selon une troisième variante du premier mode de réalisation ;
- la figure 6 est une vue partielle en coupe longitudinale d'un dispositif de raccordement selon un deuxième mode de réalisation ;
- la figure 7 est une vue partielle de détail en coupe longitudinale du dispositif de raccordement selon le deuxième mode de réalisation, après raccordement d'une portion d'extrémité de tube ;
- la figure 8 est une vue analogue à la figure 6 d'un dispositif de raccordement selon un troisième mode de réalisation ;
- la figure 9 est une vue analogue à la figure 4 d'un perfectionnement du dispositif selon la deuxième variante du premier mode de réalisation ;
- les figures 10a et 10b sont des vues analogues aux figures 2a et 2c de ce dispositif.

En référence aux figures, le dispositif de raccordement selon l'invention est destiné au raccordement de tubes 100 ayant une portion d'extrémité pourvue d'un chanfrein extérieur 101. La portion d'extrémité comporte ici également un chanfrein intérieur 102 mais ce n'est pas obligatoire en relation avec l'invention.

Le dispositif de raccordement peut être du type union, un raccord en T ou en Y, un piquage ou autre. Les deux extrémités du dispositif peuvent être raccordées à des tubes ou bien à un tube et à un élément de circuit comme une pompe, un actionneur, un distributeur ou autre.

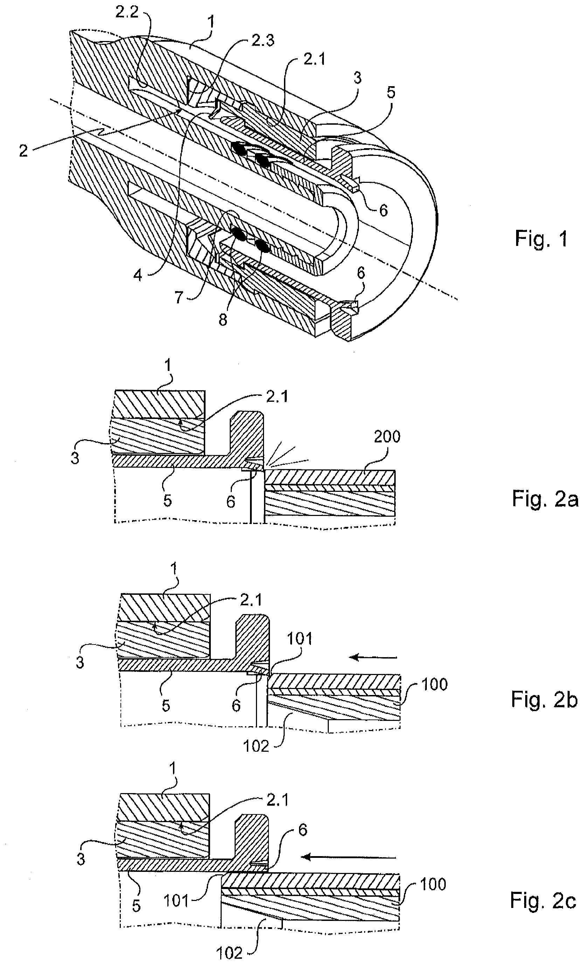

En référence aux figures 1 et 2, le dispositif de raccordement selon le premier mode de réalisation comprend un corps tubulaire 1 dans lequel est réalisé un logement étagé, généralement désigné en 2, comportant un tronçon d'entrée 2.1 et un tronçon terminal 2.2 raccordé au tronçon d'entrée 2.1 via un épaulement 2.3. Dans le tronçon d'entrée 2.1 est fixé un insert tubulaire 3 en deux parties emprisonnant une rondelle 4 d'accrochage de la portion d'extrémité de tube et recevant un poussoir 5 à coulissement.

Le tronçon terminal 2.2 est agencé pour recevoir le tronçon terminal de la portion d'extrémité de tube 100.

La rondelle 4 est une rondelle élastiquement déformable ayant un pourtour interne divisé en une pluralité de dents et ayant un état de repos dans lequel les dents définissent une section de passage inférieure à une section externe de la portion d'extrémité de tube 100 et un état déformé dans lequel la section de passage définie par les dents est égale ou supérieure à la section externe de la portion d'extrémité de tube 100.

Le poussoir 5 est tubulaire et définit une section de passage de la portion d'extrémité de tube 100. Le poussoir 5 est mobile entre une première position dans laquelle il laisse la rondelle 4 assurer la retenue de la portion d'extrémité de tube 100 et une deuxième position dans laquelle il empêche la rondelle 4 d'assurer la retenue de la portion d'extrémité de tube 100. Le poussoir 5 a, à l'opposé de la rondelle 4, une première extrémité en saillie du corps 1 permettant la manœuvre du poussoir 5 de sa première position vers sa deuxième position et, du côté de la rondelle 4, une deuxième extrémité agencée pour soulever les dents de la rondelle 4 lorsque le poussoir 5 est dans sa deuxième position.

Le dispositif comprend deux butées 6 escamotables agencées pour qu'elles s'opposent à une introduction dans le corps 1 d'une portion d'extrémité de tube non chanfreinée et pour que le chanfrein extérieur 101 forme une came d'escamotage des butées 6 lorsque la portion d'extrémité de tube 100 chanfreinée est introduite dans le corps 1. Les butées 6 sont solidaires de la première extrémité du poussoir 5 opposée à la rondelle 4. Plus précisément, les butées 6 ont la forme de languettes ménagées dans la paroi interne de la première extrémité du poussoir 5 pour s'étendre sensiblement axialement en ayant une extrémité aval solidaire du poussoir 5 et une extrémité amont libre s'étendant en saillie interne dans la section de passage définie par le poussoir 5 (« aval » et « amont » font référence au sens d'introduction de la portion d'extrémité de tube dans le dispositif).

Le corps 1 comprend un appendice tubulaire central 7 s'étendant coaxialement et en saillie axiale dans le logement étagé 2 et sur lequel la portion d'extrémité de tube 100 est destinée à être engagée. Deux éléments d'étanchéité sont montés sur ledit appendice tubulaire central 7 pour être comprimé entre une surface extérieure de l'appendice tubulaire central 7 et une surface intérieure de la portion d'extrémité de tube 100.

Pour raccorder un tube au dispositif de raccordement, il faut :
- couper le tube à longueur ;
- conformer la portion d'extrémité de tube 100 coupée en lui donnant si nécessaire une section circulaire et en y réalisant au moins un chanfrein extérieur 101 ;
- introduire la portion d'extrémité de tube 100 dans le dispositif de raccordement.

On voit sur les figures 2b et 2c que le chanfrein extérieur 101 forme une came d'escamotage des butées 6 lorsque la portion d'extrémité de tube 100 chanfreinée est introduite dans le corps 1.

A l'inverse, on voit, à la figure 2a, qu'une portion d'extrémité de tube 200 dépourvue de chanfrein extérieur vient buter contre les butées 6 sans pouvoir escamoter celles-ci.

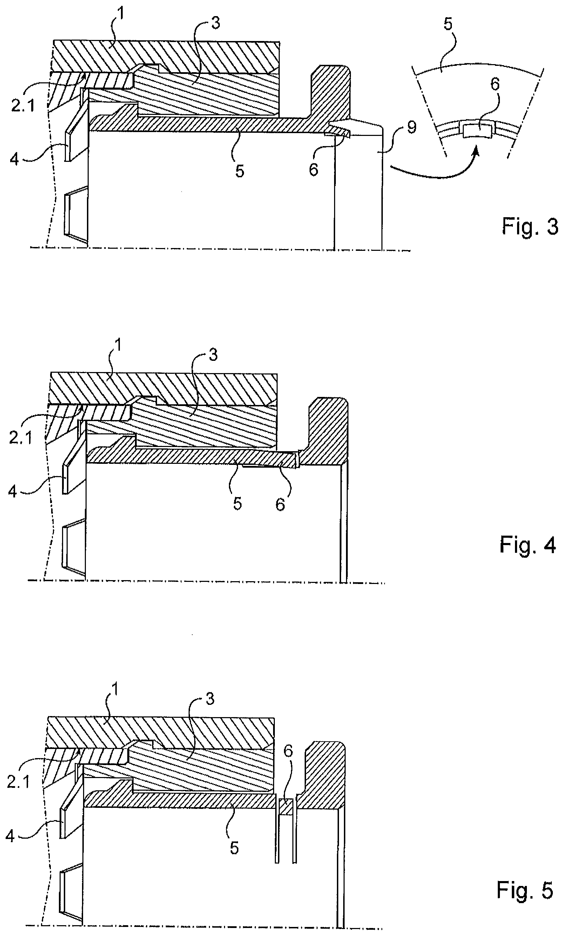

Dans la première variante de la figure 3, les butées 6 s'étendent en retrait axial d'une surface annulaire additionnelle 9 de guidage de la portion d'extrémité de tube 100, ladite surface annulaire additionnelle de guidage 9 s'étendant axialement en amont des butées 6 par référence à un sens d'introduction de la portion d'extrémité de tube 100 dans le dispositif.

Dans la deuxième variante de la figure 4, les butées 6 ne sont plus solidaires de la première extrémité du poussoir 5 mais d'une partie centrale du poussoir 5. Les butées 6 ont la forme de pattes axiales délimitées dans la paroi du poussoir 5. Les butées 6 ont ici sensiblement la même épaisseur que la paroi tubulaire du poussoir 5 dans laquelle les butées 6 sont délimitées et ont leur extrémité libre du côté de la première extrémité du poussoir 5. L'extrémité libre de chaque butée 6 s'étend en saillie à l'intérieur du poussoir 5 et présente une surface radiale faisant face à l'entrée du poussoir 5.

Ainsi, le chanfrein extérieur 101 d'une extrémité de tube 100 forme une came d'escamotage des butées 6 lorsque la portion d'extrémité de tube 100 chanfreinée est introduite dans le corps 1. A l'inverse, une portion d'extrémité de tube 200 dépourvue de chanfrein extérieur vient buter contre les surfaces radiales des extrémités libres des butées 6 sans pouvoir escamoter celles-ci.

La surface interne de la partie du poussoir 5 s'étendant entre la première extrémité du poussoir 5 et l'extrémité libre des butées 6 forme une surface de guidage de la portion d'extrémité de tube 100 avant sa rencontre avec les butées 6.

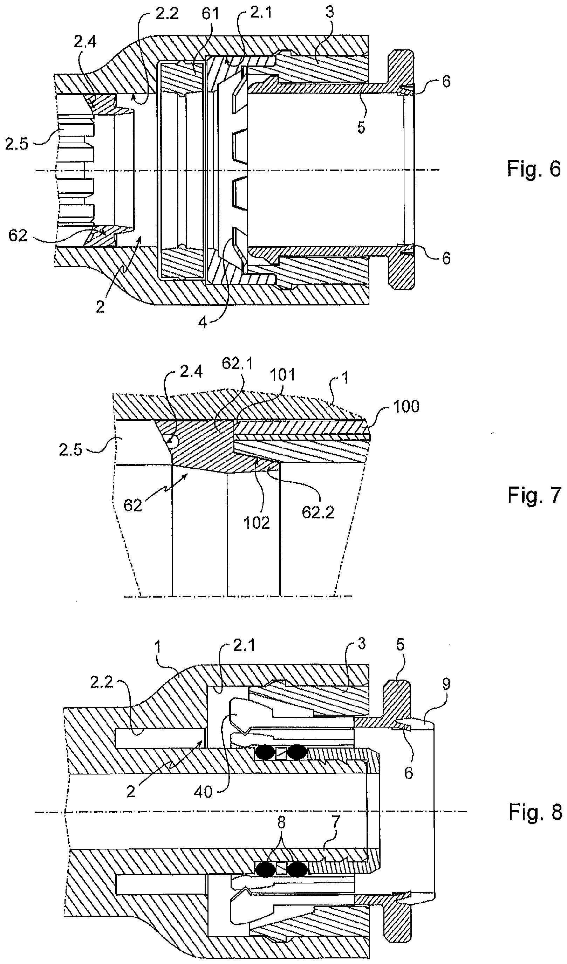

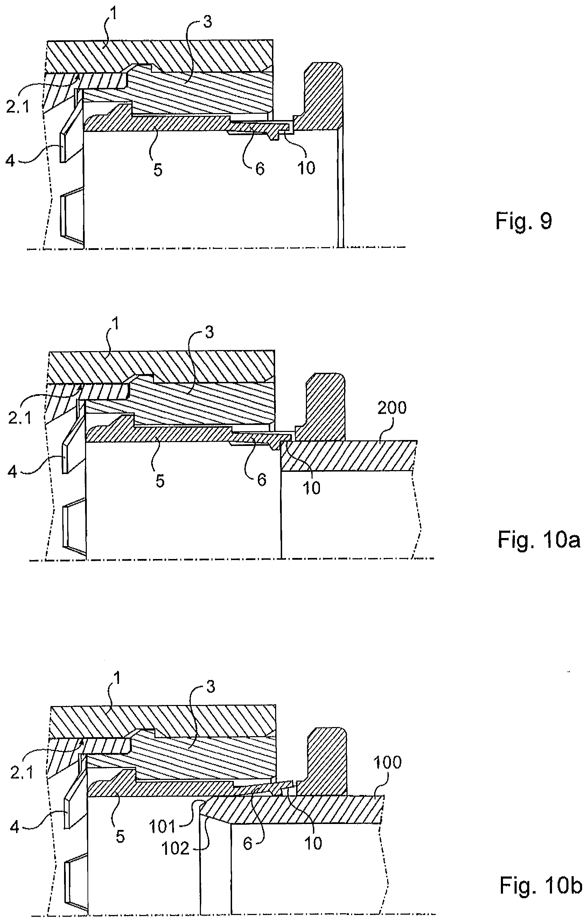

Dans le perfectionnement de cette variante représenté aux figures 9, 10a, 10b, les butées 6 ont une épaisseur inférieure à l'épaisseur de la paroi tubulaire du poussoir 5 dans laquelle les butées 6 sont délimitées pour permettre une plus grande flexibilité des butées 6 et limiter l'effort nécessaire à l'introduction du tube dans le poussoir 5. Dans le cas où le dispositif comprend un élément d'étanchéité disposé dans un logement du corps 1 pour prendre appui sur une surface extérieure de la portion d'extrémité de tube 100 (comme par exemple l'élément d'étanchéité 61 de la figure 6), la relativement grande flexibilité des butées 6 permet de limiter le risque d'une détérioration de cette surface extérieure du tube et donc le risque d'un contact imparfait avec l'élément d'étanchéité.

Chaque butée 6 est pourvue d'un relief 11 en saillie vers l'intérieur du poussoir 5. Le relief 11 présente une surface radiale qui fait face à l'entrée du poussoir 5 et qui s'étend à distance de l'extrémité libre. Une surface d'appui 10 s'étend axialement entre ladite surface radiale et l'extrémité libre de la butée 6.

Comme précédemment, le chanfrein extérieur 101 d'une extrémité de tube 100 forme une came d'escamotage des butées 6 lorsque la portion d'extrémité de tube 100 chanfreinée est introduite dans le corps 1. A l'inverse, une portion d'extrémité de tube 200 dépourvue de chanfrein extérieur vient buter contre les surfaces radiales des extrémités libres des butées 6 sans pouvoir escamoter celles-ci. Les surfaces d'appui 10 sont appliquées contre la surface externe de la portion d'extrémité du tube 200 et empêchent que les butées 6 ne plient sous l'effort d'insertion du tube 200.

Les surfaces d'appui 10 sont d'autant plus utiles que la flexibilité des butées 6 est importante.

Dans la troisième variante de la figure 5, les butées 6 ne s'étendent plus axialement mais circonférentiellement. Plus précisément, les butées 6 ont la forme de languettes ménagées dans la paroi interne de la portion centrale du poussoir 5 pour s'étendre sensiblement selon la circonférence du poussoir 5 en ayant une extrémité solidaire du poussoir 5 et une extrémité libre s'étendant en saillie interne dans la section de passage définie par le poussoir 5. On comprend que la portion d'extrémité de tube 100 ne vient plus en appui contre la face terminale des languettes mais contre la face latérale amont de celles-ci (« amont » fait référence au sens d'introduction de la portion d'extrémité de tube 100 dans le dispositif).

En référence aux figures 6 et 7, et selon le deuxième mode de réalisation, le corps 1 est dépourvu d'appendice 7.

Un premier élément annulaire d'étanchéité 61 est logé dans le tronçon d'entrée 2.1 entre l'épaulement 2.3 et l'insert 3. Le premier élément d'étanchéité 61 est ainsi agencé pour être comprimé entre une paroi axiale du tronçon d'entrée 2.1 et une surface extérieure de la portion d'extrémité de tube 100.

Un deuxième élément d'étanchéité annulaire généralement désigné en 62 est logé dans le tronçon terminal 2.2 en appui contre des parois sensiblement radiales 2.4 qui s'étendent en aval du deuxième élément d'étanchéité annulaire 62 par référence à un sens d'introduction de la portion d'extrémité de tube 100 dans le dispositif et qui sont formées par des extrémités de nervures 2.5 du corps 1 s'étendant axialement dans le tronçon terminal 2.2. Le deuxième élément d'étanchéité 62 comprend une portion principale annulaire 62.1 ayant un pourtour interne en saillie axiale duquel s'étend un manchon tubulaire 62.2 agencé pour être appliqué contre une portion annulaire de surface interne de la portion d'extrémité du tube 100, ici le chanfrein interne 101, lorsque la portion principale de l'élément d'étanchéité est comprimée entre les parois sensiblement radiales 2.4 et la surface frontale de la portion d'extrémité de tube 100. On notera que du fait de l'espace entre les nervures 2.5, la pression du fluide peut s'exercer derrière la portion principale annulaire 62.1 pour plaquer encore mieux la portion principale annulaire 62.1 contre la surface frontale de la portion d'extrémité de tube 100 et le manchon tubulaire 62.2 contre le chanfrein interne 102 (le principe d'un tel fonctionnement a notamment été décrit dans le document FR-A-2941027). De préférence également dans ce but, les parois radiales 2.4 sont inclinées de telle manière que l'effort de compression exercé par la surface frontale de la portion d'extrémité du tube 100 sur le deuxième élément d'étanchéité 62, lors de l'introduction de la portion d'extrémité du tube 100, tend à appliquer le manchon tubulaire 62.2 contre le chanfrein intérieur 102.

On notera que l'élément d'étanchéité 61 n'assure de manière effective une fonction d'étanchéité qu'en cas de défaillance de l'élément d'étanchéité 62. Cette défaillance peut résulter d'une omission ou d'une détérioration de l'élément d'étanchéité 62 par exemple lors de sa mise en place.

Ce mode de réalisation est particulièrement intéressant car la section de passage minimale n'est que légèrement inférieure à la section intérieure du tube.

En référence à la figure 8 et selon le troisième mode de réalisation, le corps du dispositif est sensiblement identique à celui du premier mode de réalisation mais le dispositif comprend, à la place de la rondelle 4, un organe d'accrochage 40 de type pince en une seule pièce avec le poussoir 5, l'organe d'accrochage 40 formant la deuxième extrémité du poussoir 5. Le poussoir 5 est pour le reste identique à celui de la figure 3.

On notera que la butée est distincte de la partie active du dispositif servant à accrocher le tube (cette partie active étant soit les dents de la rondelle d'accrochage, soit la portion d'extrémité de la pince servant à enserrer le tube). La butée peut donc être disposée au voisinage de l'entrée du dispositif pour que l'opérateur puisse clairement déceler que le tube n'est pas suffisamment enfoncé dans le dispositif pour que la connexion soit réalisée.

Bien entendu, l'invention n'est pas limitée aux modes de réalisation décrits mais englobe toute variante entrant dans le champ de l'invention telle que définie par les revendications.

En particulier, le corps du dispositif peut avoir une autre forme que celle décrite.

Le nombre et la forme des éléments d'étanchéité peuvent être modifiés.

Les nervures 2.5 peuvent être remplacées par un renflement dans lequel a été ménagé un canal d'amenée du fluide derrière l'élément d'étanchéité 62.

Le dispositif peut ne pas comprendre de poussoir.

Le nombre, la forme et la position des butées peuvent être modifiés.

La butée peut être solidaire du corps ou de l'insert en l'absence de poussoir.

## Revendications

1. Dispositif de raccordement d'un tube (100) ayant une portion d'extrémité pourvue d'un chanfrein extérieur (101), comprenant un corps tubulaire (1) pourvu intérieurement d'un élément d'étanchéité (62) annulaire et d'un organe d'accrochage (4, 40) pour assurer une retenue étanche de la portion d'extrémité du tube dans le corps, au moins une butée (6) escamotable agencée pour que le chanfrein (101) forme une came d'escamotage de la butée lorsque la portion d'extrémité du tube (100) chanfreinée est introduite dans le corps (1) et pour s'opposer à une introduction dans le corps d'une même portion d'extrémité de tube (200) qui serait dépourvue de chanfrein extérieur, et un poussoir (5) tubulaire de déconnexion, coaxial à l'élément annulaire d'étanchéité (62), qui définit une section de passage de la portion d'extrémité du tube (100) et qui est mobile entre une première position dans laquelle il laisse l'organe d'accrochage (4) assurer la retenue et une deuxième position dans laquelle il empêche l'organe d'accrochage d'assurer la retenue, le poussoir ayant une première extrémité opposée à l'organe d'accrochage et agencée pour pouvoir manœuvrer le poussoir de sa première position à sa deuxième position, et la butée étant délimitée dans une paroi du poussoir et s'étendent axialement par rapport au poussoir.

2. Dispositif selon la revendication 1, dans lequel l'organe d'accrochage et le poussoir sont en une seule pièce, l'organe d'accrochage (40) formant une deuxième extrémité de poussoir.

3. Dispositif selon la revendication 1, dans lequel l'organe d'accrochage (4) est une rondelle déformable ayant un pourtour interne divisé en une pluralité de dents, le poussoir (5) ayant une deuxième extrémité agencée pour soulever les dents lorsque le poussoir est dans sa deuxième position.

4. Dispositif selon la revendication 1, dans lequel la butée (6) est solidaire de la première extrémité du poussoir (5).

5. Dispositif selon la revendication 1, dans lequel les butées (6) ont une épaisseur sensiblement égale à une épaisseur de la paroi du poussoir (5).

6. Dispositif selon la revendication 1, dans lequel les butées (6) ont une épaisseur inférieure à une épaisseur de la paroi du poussoir (5) et comportent un relief en saillie vers l'intérieur du poussoir.

7. Dispositif selon la revendication 6, dans lequel le relief s'étend à distance de l'extrémité libre de la butée (6) de sorte que s'étend entre le relief et l'extrémité libre une surface d'appui (10) contre une surface externe de la portion d'extrémité de tube (200) non chanfreinée.

8. Dispositif selon l'une quelconque des revendications précédentes, dans lequel l'élément d'étanchéité (61) est reçu dans un logement du corps pour être comprimé entre une paroi axiale du logement et une surface extérieure de la portion d'extrémité du tube (100).

9. Dispositif selon l'une quelconque des revendications précédentes, dans lequel l'élément d'étanchéité (62) est reçu dans un logement du corps pour être comprimé entre une paroi radiale (2.4) du logement et une surface frontale de la portion d'extrémité du tube (100) .

10. Dispositif selon la revendication 9, dans lequel l'élément d'étanchéité (62) comprend une portion principale annulaire (62.1) ayant un pourtour interne en saillie axiale duquel s'étend un manchon tubulaire (62.2) agencé pour être appliqué contre une portion annulaire de surface interne de la portion d'extrémité du tube lorsque la portion principale de l'élément d'étanchéité est comprimée entre la paroi radiale (2.4) du logement et la surface frontale de la portion d'extrémité du tube (100).

11. Dispositif selon l'une quelconque des revendications précédentes, dans lequel le corps (1) comprend un appendice tubulaire central (7) sur lequel la portion d'extrémité du tube (100) est destinée à être engagée, l'élément d'étanchéité (8) étant monté sur ledit appendice pour être comprimé entre une surface extérieure de l'appendice et une surface intérieure de la portion d'extrémité du tube (100).

12. Dispositif selon l'une quelconque des revendications précédentes, dans lequel la butée (6) s'étend en retrait axial d'une surface annulaire additionnelle (9) de guidage de la portion d'extrémité du tube (100), ladite surface annulaire additionnelle de guidage s'étendant en amont de la butée (6) par référence à un sens d'introduction de la portion d'extrémité du tube dans le dispositif.

13. Procédé de raccordement d'un tube (100) à un dispositif de raccordement selon l'une quelconque des revendications précédentes, comprenant les étapes de :
- découper le tube (100) à longueur ;
- conformer une portion d'extrémité du tube (100) en lui donnant si nécessaire une section circulaire et en y réalisant au moins un chanfrein extérieur (101) ;
- introduire la portion d'extrémité de tube dans le dispositif de raccordement.

## Patentansprüche

1. Verbindungsvorrichtung zur Verbindung eines Rohres (100), das einen Endabschnitt hat, der mit einer Außenfase (101) versehen ist, umfassend ein rohrförmiges Gehäuse (1), das innen mit einem ringförmigen Dichtungselement (62) und mit einem Befestigungsorgan (4, 40) versehen ist, um ein dichtes Halten des Endabschnittes des Rohres in dem Gehäuse sicherzustellen, mindestens einen ausrückbaren Anschlag (6), der so ausgebildet ist, dass die Fase (101) einen Ausrücknocken zum Ausrücken des Anschlags bildet, wenn der Endabschnitt des abgeschrägten Rohres (100) in das Gehäuse (1) eingeführt wird, und dass er sich einem Einführen eines gleichen Rohrendabschnittes (200), der ohne eine Außenfase wäre, in das Gehäuse widersetzt, und einen zum ringförmigen Dichtungselement (62) koaxialen rohrförmigen Lösestößel (5), der einen Durchtrittsquerschnitt für den Endabschnitt des Rohres (100) definiert und der zwischen einer ersten Position, in der er das Befestigungsorgan (4) das Halten sicherstellen lässt, und einer zweiten Position beweglich ist, in der er verhindert, dass das Befestigungsorgan das Halten sicherstellt, wobei der Stößel ein erstes Ende hat, das dem Befestigungsorgan entgegengesetzt und so ausgebildet ist, dass es den Stößel von seiner ersten Position in seine zweite Position bewegen kann, und wobei der Anschlag in einer Wand des Stößels begrenzt ist und sich axial in Bezug auf den Stößel erstreckt.

2. Vorrichtung nach Anspruch 1, bei der das Befestigungsorgan und der Stößel einstückig ausgebildet sind, wobei das Befestigungsorgan (40) ein zweites Stößelende bildet.

3. Vorrichtung nach Anspruch 1, bei der das Befestigungsorgan (4) eine verformbare Scheibe ist, die einen Innenumfang hat, der in eine Vielzahl von Zähnen unterteilt ist, wobei der Stößel (5) ein zweites Ende hat, das so ausgebildet ist, dass es die Zähne anhebt, wenn der Stößel in seiner zweiten Position ist.

4. Vorrichtung nach Anspruch 1, bei der der Anschlag (6) fest mit dem ersten Ende des Stößels (5) verbunden ist.

5. Vorrichtung nach Anspruch 1, bei der die Anschläge (6) eine Dicke haben, die im Wesentlichen gleich einer Dicke der Wand des Stößels (5) ist.

6. Vorrichtung nach Anspruch 1, bei der die Anschläge (6) eine Dicke haben, die geringer als eine Dicke der Wand des Stößels (5) ist, und ein ins Innere des Stößels vorstehendes Reliefelement umfassen.

7. Vorrichtung nach Anspruch 6, bei der sich das Reliefelement mit Abstand zum freien Ende des Anschlags (6) erstreckt, sodass sich zwischen dem Reliefelement und dem freien Ende eine Anlagefläche (10) zur Anlage an einer Außenfläche des nicht abgeschrägten Rohrendabschnittes (200) erstreckt.

8. Vorrichtung nach einem der vorhergehenden Ansprüche, bei der das Dichtungselement (61) in einer Aufnahme des Gehäuses aufgenommen ist, um zwischen einer axialen Wand der Aufnahme und einer Außenfläche des Endabschnittes des Rohres (100) zusammengedrückt zu sein.

9. Vorrichtung nach einem der vorhergehenden Ansprüche, bei der das Dichtungselement (62) in einer Aufnahme des Gehäuses aufgenommen ist, um zwischen einer radialen Wand (2.4) der Aufnahme und einer Stirnfläche des Endabschnittes des Rohres (100) zusammengedrückt zu sein.

10. Vorrichtung nach Anspruch 9, bei der das Dichtungselement (62) einen ringförmigen Hauptabschnitt (62.1) umfasst, der einen Innenumfang hat, von dem eine rohrförmige Hülse (62.2) axial vorsteht, die so ausgebildet ist, dass sie an einem ringförmigen Innenflächenabschnitt des Endabschnittes des Rohres angelegt wird, wenn der Hauptabschnitt des Dichtungselements zwischen der radialen Wand (2.4) der Aufnahme und der Stirnfläche des Endabschnittes des Rohres (100) zusammengedrückt ist.

11. Vorrichtung nach einem der vorhergehenden Ansprüche, bei der das Gehäuse (1) ein zentrales rohrförmiges Ansatzstück (7) umfasst, auf das der Endabschnitt des Rohres (100) aufgesetzt werden soll, wobei das Dichtungselement (8) auf dem genannten Ansatzstück angebracht ist, um zwischen einer Außenfläche des Ansatzstückes und einer Innenfläche des Endabschnittes des Rohres (100) zusammengedrückt zu sein.

12. Vorrichtung nach einem der vorhergehenden Ansprüche, bei der der Anschlag (6) von einer zusätzlichen ringförmigen Führungsfläche (9) zur Führung des Endabschnittes des Rohres (100) axial zurückversetzt ist, wobei sich die zusätzliche ringförmige Führungsfläche stromaufwärts des Anschlags (6) in Bezug auf eine Einführungsrichtung des Endabschnittes des Rohres in die Vorrichtung erstreckt.

13. Verfahren zum Verbinden eines Rohres (100) mit einer Verbindungsvorrichtung nach einem der vorhergehenden Ansprüche, umfassend die Schritte:
- Ablängen des Rohres (100);
- Formen eines Endabschnittes des Rohres (100), indem man ihm falls erforderlich einen kreisförmigen Querschnitt verleiht und man an ihm mindestens eine Außenfase (101) erzeugt;
- Einfügen des Rohrendabschnittes in die Verbindungsvorrichtung.

## Claims

1. A coupling device for a tube (100) having an end portion provided with an outer chamfer (101), the device comprising a tubular body (1) provided internally with an annular sealing element (62) and with an attachment member (4, 40) for retaining the end portion of the tube in leaktight manner in the body, at least one retractable abutment (6) arranged so as to oppose insertion into the body of a tube end portion that is not chamfered (200) and so that the chamfer (101) of the tube end portion that is chamfered (100) forms a cam for causing the abutment to retract while it is being inserted into the body (1) and a tubular disconnection pusher (5) that is coaxial with the annular sealing element (62), that defines a through section for the tube end portion (100), and that is movable between a first position in which it allows the attachment member (4) to perform retention, and a second position in which it prevents the attachment member from performing retention, the pusher having a first end remote from the attachment member and arranged to be capable of moving the pusher from its first position to its second position, and the abutment being part of the pusher.

2. A device according to claim 1, wherein the attachment member and the pusher are a single piece, the attachment member (40) forming a second end of the pusher.

3. A device according to claim 1, wherein the attachment member (4) is a deformable washer having an inner outline subdivided into a plurality of teeth, the pusher (5) having a second end arranged to lift the teeth when the pusher is in its second position.

4. A device according to claim 1, wherein the abutment (6) is part of the first end of the pusher (5).

5. A device according to claim 1, wherein the abutments (6) are of thickness substantially equal to the thickness of the wall of the pusher (5).

6. A device according to claim 1, wherein the abutments (6) are of thickness that is smaller than the thickness of the wall of the pusher (5) and include portions in relief projecting towards the inside of the pusher.

7. A device according to claim 6, wherein the portion in relief extends at a distance from the free end of the abutment (6) such that between the portion in relief and the free end there extends a bearing surface (10) for bearing against an outer surface of the non-chamfered tube end portion (200).

8. A device according to any preceding claim, wherein the sealing element (61) is received in a housing of the body so as to be compressed between an axial wall of the housing and an outside surface of the tube end portion (100) .

9. A device according to any preceding claim, wherein the sealing element (62) is received in a housing of the body to be compressed between a radial wall (2.4) of the housing and a front surface of the tube end portion (100) .

10. A device according to claim 9, wherein the sealing element (62) has an annular main portion (62.1) with an internal outline projecting axially from which there extends a tubular sleeve (62.2) arranged to be pressed against an annular internal surface portion of the end portion of the tube when the main portion of the sealing element is compressed between the radial wall (2.4) of the housing and the front surface of the tube end portion (100) .

11. A device according to any preceding claim, wherein the body (1) includes a central tubular appendix (7) onto which the tube end portion (100) is to be engaged, the sealing element (8) being mounted on said appendix to be compressed between an outside surface of the appendix and an inside surface of the tube end portion (100).

12. A device according to any preceding claim, wherein the abutment (6) is set back axially from an additional annular guide surface (9) for guiding the tube end portion (100), said additional annular guide surface extending upstream from the abutment (6) relative to the direction for inserting the tube end portion in the device.

13. A method of coupling a tube (100) to a coupling device, the method comprising the steps of:
• providing a retractable abutment on the device so as to allow a tube end portion to be inserted only if it has an outer chamfer;
• cutting the tube (100) to length;
• shaping a tube end portion (100) so as to give it a circular section, where necessary, and so as to form thereon at least one outer chamfer (101); and
• inserting the tube end portion into the coupling device.
